## Europäisches Patentamt
## European Patent Office
## Office européen des brevets

(19)

(11) Veröffentlichungsnummer: **0 363 483**
**A1**

(12) **EUROPÄISCHE PATENTANMELDUNG**
**veröffentlicht nach Art. 158 Abs. 3**
**EPÜ**

(21) Anmeldenummer: 88903993.9

(22) Anmeldetag: 03.02.88

(86) Internationale Anmeldenummer:
**PCT/SU88/00026**

(87) Internationale Veröffentlichungsnummer:
**WO 89/07027 (10.08.89 89/18)**

(51) Int. Cl.⁵: **B23G 5/08**

(43) Veröffentlichungstag der Anmeldung:
**18.04.90 Patentblatt 90/16**

(84) Benannte Vertragsstaaten:
**AT CH DE FR GB IT LI NL SE**

(71) Anmelder: **SVININ, Petr Alexeevich**
**ul. Kurchatova, 48-105**
**Krasnoyarsk, 660026(SU)**

Anmelder: **KOCHETOV, Vladimir Efimovich**
**ul. Komsomolskaya, 19/1-11 Zaporozhskaya**
**obl.**
**Dneprorudny, 332226(SU)**

(72) Erfinder: **SVININ, Petr Alexeevich**
**ul. Kurchatova, 48-105**
**Krasnoyarsk, 660026(SU)**
Erfinder: **KOCHETOV, Vladimir Efimovich**
**ul. Komsomolskaya, 19/1-11 Zaporozhskaya**
**obl.**
**Dneprorudny, 332226(SU)**

(74) Vertreter: **Patentanwälte Zellentin & Partner**
**Zweibrückenstrasse 15**
**D-8000 München 2(DE)**

(54) **GEWINDESCHNEIDWERKZEUG.**

(57) Das erfindungsgemäße Schneideisen enthält Gewindeschneidbacken, die mit ihren Sitzstellen in den Sitzstellen des Gehäuses eingesetzt sind und mehrere Schneidkanten (9) mit einem Gewinde (11) aufweisen. Die Sitzstellen der Gewindeschneidbacken (2) sind in Form von Flächen (14, 15) eines Zylinders (12) und eines Vielflächners (13) ausgebildet, wobei die Sitzstellen des Gehäuses aus zwei koaxialen Bohrungen - einer zylinderförmigen Bohrung und einer mehrflächigen Bohrung - ausgeführt sind, wobei die Anzahl der Flächen des Vielflächners (13) ebensowie die Anzahl der Schneidkanten (9) der Gewindeschneidbacke (2) der Anzahl der Gewindeschneidbacken (2) des Schneideisens gleich ist.

FIG.1

FIG.3

SCHNEIDEISEN

Technisches Gebiet

Die Erfindung bezieht sich auf Schneidwerkzeuge zum Gewindeschneiden und betrifft insbesondere ein Schneideisen mit auswechselbaren Gewindeschneidbacken

Stand der Technik

Zur Zeit gibt es ausreichend viel Werkzeuge zur Gewindeherstellung sowohl durch plastische Verformung (Gewinderollen) als auch durch Schneiden. Die Werkzeuge zur Gewindeherstellung durch plastische Verformung, deren Vorteile in einer hohen Leistungsfähigkeit bei der Gewindeherstellung an dem zu bearbeitenden Teil bestehen, können jedoch zur Gewindeherstellung an Teilen von einer komplizierten asymmetrischen Konfiguration nicht eingesetzt werden; sie sind auch für die Gewindeherstellung an Teilen aus schwer bearbeitbaren (hitzebeständigen, nichtrostenden, gehärteten usw.) Werkstoffen wegen kurzer Standzeiten des Rollwerkzeuges nicht geeignet; sie können auch zur Gewindeherstellung an Teilen aus verformbaren Werkstoffen nicht verwendet werden, weil beim Rollen eines Gewindes mit einem Nenndurchmesser von 5 mm und kleiner, die während der plastischen Verformung entstehende Reibungskraft, die zulässige Verdrehungsbeanspruchung des Stabes des zu bearbeitenden Werkstückes übersteigt.

Zu einem hochqualitativen Gewindeschneiden an Teilen mit einer komplizierten asymmetrischen Konfiguration sowie an Teilen aus schwer bearbeitbaren Werkstoffen und verformbaren Legierungen wird, z. B. ein bekanntes als ein Ganzteil ausgeführtes rundes Schneideisen verwendet, das jedoch keine längere Standzeit aufweist. Nach Ablauf einer Standzeit (nach dem Nachschärfen) gewährleistet es in der Regel die vorgegebenen Hauptkenndaten des Gewindes nicht und muß ausgewechselt werden. Die Verwendung eines als ein Ganzteil ausgeführten runden Schneideisens zum Gewindeschneiden an schwer bearbeitbaren Werkstoffen bereitet Schwierigkeiten, die durch dessen Konstruktion hervorgerufen sind.

Bekannt ist ein Schneideisen mit auswechselbaren Gewindeschneidbacken, das eine längere Standzeit als das runde Schneideisen aufweist, weil in ihm die Auswechselung der verschlissenen Gewindeschneidbacken und die Verwendung von Gewindeschneidbacken aus Qualitätswerkzeugstählen und harten Legierungen möglich sind (SU, A, Nr. 903002).

Das bekannte Schneideisen mit auswechselbaren Gewindeschneidbacken enthält ein Gehäuse mit Sitzstellen zur Aufnahme der Gewindeschneidbacken, die mit ihren Sitzstellen in Sitzstellen des Gehäuses eingesetzt sind.Die auswechselbaren Gewindeschneidbacken weisen mehrere Schneidkanten auf, an denen das Gewindeprofil ausgebildet ist. Die auswechselbaren Gewindeschneidbacken sind am Gehäuse mittels Gewindestützen angebracht und durch bewegbare Elemente befestigt, die in Form von Segmenten mit beiderseitigen Gewindesektoren ausgeführt sind, welche gleichzeitig mit zwei Gewindeschneidbacken zusammenwirken.

Die Sitzstellen sind im Gehäuse in Form von Exzenterbolzen, durch deren Drehung die Gewindeschneidbacken in radialer Richtung in ihrer Lage eingestellt werden, sowie in Form von ebenen Basisflächen ausgeführt, die unterschiedliche Höhe aufweisen und zu einer folgerichtigen Verschiebung der Gewindesteigung zwischen den angrenzenden Gewindeschneidbacken bestimmt sind.

Die Sitzstellen der Gewindeschneidbacke sind in Form einer runden Bohrung und einer Außengewindefläche ausgebildet, wobei die Leitung der Bohrung mit dem Exzenterbolzen des Gehäuses und die Außengewindefläche mit den Gewindesektoren der bewegbaren Segmente zusammenwirkt.

Am Gehäuse werden drei auswechselbare Gewindeschneidbacken angeordnet, von denen jede vier Schneidkanten aufweist. Die Anordnung der Schneidkanten in der Arbeitsstellung erfolgt mittels Spezialkeilen, die mit dem Profil der Nuten an den Gewindeschneidbacken zusammenwirken.

Bei dieser Konstruktion des Schneideisens mit auswechselbaren Gewindeschneidbacken sind die Sitzstellen am Gehäuse nicht in der Lage, die Gewindeschneidbacke unmittelbar in die Arbeitsstellung zu bringen und sie erfordern eine besondere Einstellung, welche darin besteht, daß alle Exzenterbolzen bis zum Anschlag der Gewindeschneidbacken gegen eine Spezialschablone geschwenkt werden. Das Vorhandensein von ebenen Basissitzflächen, welche eine Verschiebung der Gewindesteigung zwischen den angrenzenden Gewindeschneidbacken gewährleisten, erschwert einerseits bedeutend die Fertigung eines Schneideisens und schließt andererseits die Auswechselbarkeit der Gewindeschneidbacken aus, weil bei dieser Konstruktion die Gewindeschneidbacken eine unterschiedliche Höhe des Anschnittkegels aufzuweisen haben, deren Größe in bezug auf die angrenzenden Gewindeschneidbacken durch die Verschiebung der Gewindesteigung zwischen diesen bestimmt wird.

Die Sitzstellen an der Gewindeschneidbacke gewährleisten auch nicht deren Einbringen in das Gehäuse unmittelbar in die Arbeitsstellung; sie erfordern die Verwendung von zusätzlichen Teilen - Feststellbolzen mit Schrauben und Keilen mit Schrauben - zur Befestigung der Gewindeschneidbacken am Gehäuse, wobei beim Nachscharfen einer Gewindeschneidbacke die Keile unter Anpassung der Breite derselben an die Breite der Nute der Gewindeschneidbacke ausgewechselt werden müssen.

Die Konstruktion des Schneideisens mit auswechselbaren Gewindeschneidbacken enthält sieben Elemente, von denen nur zwei Elemente einen funktionellen Verwendungszweck aufweisen, während die anderen fünf Elemente eine Hilfsfunktion ausüben, d. h. sie dienen zur Orientierung, Einstellung und Befestigung der Elemente mit funktionellem Bestimmungszweck. Dabei weisen die meisten Hilfselemente eine komplizierte Geometrie auf, erfordern eine nochpräzise Fertigung, wodurch die Konstruktion des Werkzeuges erheblich komplizierter wird.

Bei dem bekannten Schneideisen ist das Gehäuse außerdem mit versetzten Flächen (eine folgerichtige Versenkung der Basisflächen) ausgeführt; es sind asymmetrische Exzenterbolzen, Feststellbolzen mit vier krummlinigen Flächen vorgesehen, wobei an zwei von diesen Flächen über den unvollständigen Kreisumfang Gewindeabschnitte ausgeführt sind, was eine präzise spanende Formung und die Verwendung von Spezialausrüstungen erforderlich macht. Deshalb ist die Herstellung des bekannten Schneideisens mit auswechselbaren Gewindeschneidbacken mit einem hohen Arbeitsaufwand verbunden.

Offenbarung der Erfindung

Der vorliegenden Erfindung liegt die Aufgabe zugrunde, eine solche Konstruktion des Schneideisens mit auswechselbaren Gewindeschneidbacken zu schaffen, bei der die Sitzstellen zur Aufnahme und Befestigung der Gewindeschneidbacken einfacher ausgeführt sind und daß eine Einstellung des Schneideisens beim Einspannen der Gewindeschneidbacken im Gehäuse nicht erforderlich ist, wobei auch die Anzahl der Schneideisenbestandteile reduziert und dadurch die Konstruktion des Schneideisens selbst vereinfacht werden kann.

Diese Aufgabe wird dadurch gelöst, daß im Schneideisen, das ein Gehäuse mit Sitzstellen und auswechselbare Gewindeschneidbacken enthält, welche mit ihren Sitzstellen in Sitzstellen des Gehäuses eingesetzt sind und mehrere Schneidkanten aufweisen, an denen ein Gewinde ausgeführt ist, erfindungsgemäß die Sitzstellen jeder Gewindeschneidbacke durch eine Zylinderfläche und Flächen eines Vielflächners bildet sind und die Sitzstellen des Gehäuses durch zwei koaxiale Bohrungen, eine zylinderförmige und eine mehrflächige, gestaltet sind, die den Sitzstellen der Gewindeschneidbacken entsprechen, wobei die Anzahl der Flächen des Vielflächners ebenso wie die Anzahl der Schneidkanten einer und derselben Gewindeschneidbacke der Anzahl der Gewindeschneidbacken des Schneideisens gleich ist.

Die Verwendung des Gehäuses mit Sitzstellen, die in Form von zwei koaxialen Bohrungen, einer zylinderförmigen und einer mehrflächigen, ausgeführt sind, hat folgende Vorteile. Die Konstruktion besteht aus symmetrisch angeordneten elementaren Flächen. Deshalb ist sie fertigungsgerecht und kann ohne spanende Formung durch Pressen eines Metallpulvers oder eines Preßwerkstoffes in einem Preßwerkzeug bei einem

minimalen Arbeitsaufwand hergestellt werden. Die Konstruktion der Sitzstellen gewährleistet ein Einspannen der Gewindeschneidbacken im Gehäuse ohne Einstellung und vereinfacht die Konstruktion des Schneideisens, weil die zylinderförmigen Bohrungen eine radiale Anordnung der Gewindeschneidbacke am Gehäuse ermöglichen, während die mehrflächige Bohrung für die erforderliche Anordnung der Spitze der Schneidkante sorgt, was ebenfalls zu einer Vereinfachung der Schneideisenkonstruktion beiträgt. Die gegenseitige Abhängigkeit der Anzahl der Schneidkanten einer Gewindeschneidbacke und der Anzahl der Gewindeschneidbacken des Schneideisens gewährleistet außerdem eine volle Auswechselbarkeit der Gewindeschneidbacken untereinander.

Somit besitzt dieses Schneideisen eine einfachere und fertigungsgerechte Konstruktion, die aus vier Teilen (Gehäuse, Gewindeschneidbacken, Scheiben, Muttern) besteht, im Gegensatz zu der bekannten Schneideisenkonstruktion, die sieben Teile (Gehäuse, Gewindeschneidbacken, Schrauben zur Befestigung der Keile, Keile, Bolzen, bewegbare Segmente, Schrauben zur Befestigung der Segmente) umfaßt.

Gemäß der gestellten Aufgabe ist es vorteilhaft, daß eine der Gewindeschneidbacken derart angeordnet wird, daß deren Schneidkante, an der der relativ zu dem Gewindeanfang erste Gewindegang ausgeführt ist, in einer Ebene liegt, welche durch die Achse dieser Gewindeschneidbacke und die Achse des Schneideisens verläuft, wobei jede nachfolgende Gewindeschneidbacke am Gehäuse derart angeordnet ist, daß deren Schneidkanten, an denen die relativ zu dem Gewindeanfang ersten Gewindegänge ausgeführt sind, relativ zu der Schneidkante des ersten (in bezug auf den Gewindeanfang) Gewindeganges der ersten Gewindeschneidbacke um einen Winkel $\alpha$ verschoben sind, der $(k-1)\dfrac{360°}{n}$ beträgt, worin die

n – Anzahl der Schneidkanten an einer Gewindeschneidbacke, und die

k – Ordnungszahl der Gewindeschneidbacke

bedeuten; der Anfang des Gewindeganges ist an allen Gewindeschneidbacken symmetrisch zu der Ebene einer der Flächen des Vielflächners angeordnet.

### Beschreibung

Nachstehend wird die vorliegende Erfindung anhand der Beschreibung eines konkreten Ausführungsbeispiels unter Bezugnahme auf Zeichnungen näher erläutert. Es zeigen:

Fig. 1 eine Gesamtansicht eines erfindungsgemäßen Schneideisens mit auswechselbaren Gewindeschneidbacken, im Teillängsschnitt;

Fig. 2 Ansicht nach Pfeil A von Fig. 1;

Fig. 3 eine erfindungsgemäße Gewindeschneidbacke im vergrößerten Maßstab, im Längsschnitt;

Fig. 4 Ansicht nach Pfeil B von Fig. 3;

Fig. 5 Ansicht nach Linie V-V von Fig. 1.

### Ausführungsform der Erfindung

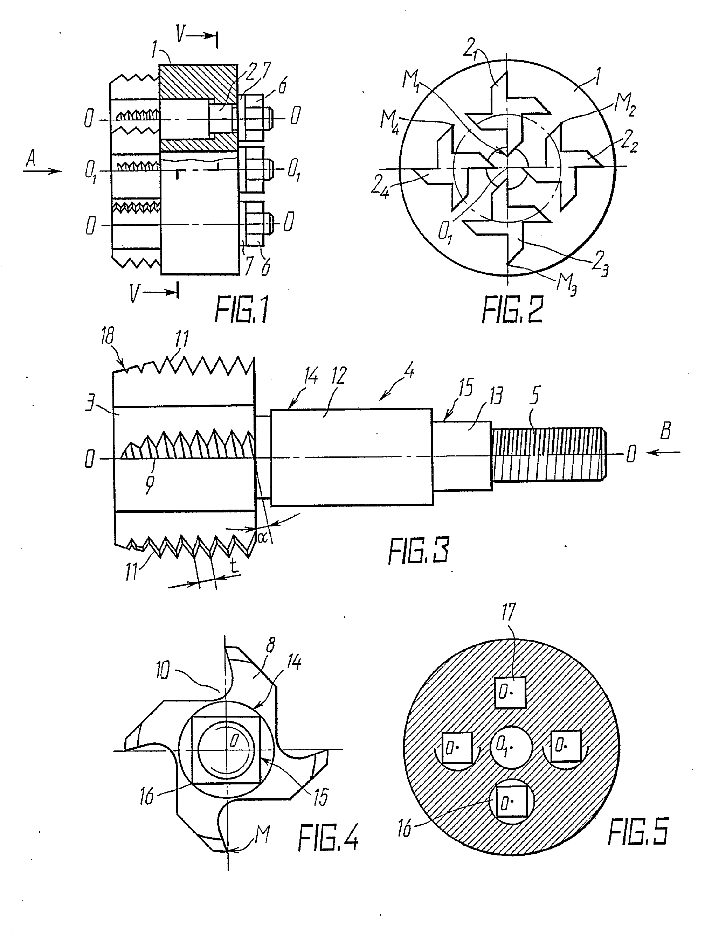

Das in Fig. 1 und Fig. 2 dargestellte erfindungsgemäße Schneideisen enthält eine Gehäuse 1, das Sitzstellen aufweist, in denen mit ihren Sitzstellen auswechselbare Gewindeschneidbacken 2 eingesetzt sind. Jede Gewindeschneidbacke 2 (Fig. 3) enthält ein Gehäuse 3 und einen Schaft 4, an dessen Ende ein Gewinde 5 ausgeführt ist sowie eine Mutter 6 (Fig. 1) und eine Scheibe 7 angeordnet sind. An der Außenfläche des Gehäuses 3 der Gewindeschneidbacke 2 sind entlang ihrer Achse O-O Zähne 8 (Fig. 4) mit Schneidkanten 9 (Fig. 3) ausgeführt. Zwischen den Zähnen 8 sind Nuten 10 (Fig. 4) zur Späneabführung vorgesehen. An den Schneidkanten 9 ist das Profil eines Gewindes 11 (Fig. 3) ausgeführt.

Die Sitzstelle jeder Gewindeschneidbacke 2 befindet sich erfindungsgemäß an ihrem Schaft 4, der koaxial angeordnete Abschnitte in Form eines Zylinders 12 und eines Vielflächners 13 aufweist. Somit stellen die Sitzstellen jeder Gewindeschneidbacke 2 eine Fläche 14 (Fig. 4) des Zylinders 12 und eine Fläche 15 des Vielflächners 13 dar. Im Gehäuse 1 sind zum Zusammenwirken mit den genannten Sitzstellen der Gewindeschneidbacke 2 Sitzstellen vorgesehen, die aus zwei koaxialen Bohrungen, und zwar einer zylinderförmigen Bohrung 16 (Fig. 5) und eines mehrflächigen Loches 17 ausge-

bildet sind.

Die Anzahl der Gewindeschneidbacken 2 am Schneideisen soll der Anzahl der Zähne 8, die am Gehäuse 3 der Gewindeschneidbacke 2 ausgebildet sind, und folglich auch der Anzahl der Schneidkanten 9 gleich sein. Die Anzahl der Schneidkanten 9 ist ihrerseits für die Anzahl der aufeinanderfolgenden Stellungen der Gewindeschneidbacke um ihre Achse 0-0 am Gehäuse 1 beim Betrieb des Schneideisens bis zum vollständigen Verschleiß der Schneidkanten 6 ausschlaggebend, und die aufeinanderfolgenden Stellungen jeder Gewindeschneidbacke 2 am Gehäuse 1 werden durch die Anzahl der Flächen des Vielflächners 13 am Schaft 4 der Gewindeschneidbacke 2 bestimmt. Folglich ist die Anzahl der Flächen des Vierlflächners 13 der Anzahl der Schneidkanten 9 der Gewindeschneidbacke 2 und der Anzahl der Gewindeschneidbacken 2 am Schneideisen gleich.

Bei der Ausführung, die in Fig. 1 bis 5 wiedergegeben ist, ist das Schneideisen mit vier Gewindeschneidbacken 2 versehen; folglich besitzt jede Gewindeschneidbacke 2 vier Schneidkanten 9. Am Schaft 4 jeder Gewindeschneidbacke 2 ist ein Vielflächner/13 in Form eines Quadrates, d. h. mit vier Flächen vorgesehen.

Das Profil des Gewindes 11 ist an jeder Schneidkante 9 der Gewindeschneidbacke 2 mit einer Versetzung ausgebildet, deren Größe 1/n der Steigung t (Fig. 3) des Gewindes 11 gleich ist, worin "n" die Anzahl der Schneidkanten 9 der Gewindeschneidbacke 2 bedeutet (bei der vorliegenden Ausführung ist es 1/4 der Steigung t des Gewindes 11).

Nachstehend wird zu einer besseren Erläuterung der Wirkungsweise des Schneideisens und zu einem besseren Verständnis der Erfindung eine der Gewindeschneidbacken 2 (in Fig. 2) mit $2_1$ und die nachfolgenden Gewindeschneidbacken (im Uhrzeigersinn gesehen) - mit $2_2$, $2_3$ und $2_4$ bezeichnet.

Zur Herstellung der Schraubenlinie des Gewindes ist eine der Gewindeschneidbacken 2 am Gehäuse 1 derart angeordnet, daß deren Schneidkante 9, an welcher der relativ zu dem Gewindenanfang 18 (Fig. 3) erste Gang des Gewindes 11 ausgeführt ist, in einer Ebene liegt, die durch die Achse

O-O der Gewindeschneidbacke $2_1$ und die Achse $O_1$-$O_1$ (Fig. 1) des Schneideisens verläuft, während deren Spitze $M_1$ (Fig. 2) der Achse $O_1$-$O_1$ des Schneideisens zugewandt ist.

Dabei ist jede nachfolgende Gewindeschneidbacke $2_2$, $2_3$ und $2_4$ am Gehäuse 1 derart angeordnet, daß deren Schneidkanten 9, an denen die relativ zu dem Gewindeanfang 18 ersten Gänge des Gewindes 11 ausgeführt sind, sowie die Spitzen $M_2$, $M_3$, $M_4$ dieser Schneidkanten relativ zur Schneidkante 9 der in bezug auf den Gewindeanfang 18 des Gewindes 11 ersten Gewindeschneidbacke $2_1$ um einen Winkel $\propto$ versetzt sind, der $(k-1) \cdot \dfrac{360°}{n}$ beträgt, worin n - Anzahl der Schneidkanten 9 an der Gewindeschneidbacke 2 (bei der vorliegenden Konstruktion sind das 4), und k - Ordnungszahl der Gewindeschneidbacke 2 (bei der vorliegenden Konstruktion sind das 1, 2, 3, 4) bedeuten, d. h. die Schneidkante 9 der Gewindeschneidbacke $2_2$ ist (im Uhrzeigersinn gesehen) um einen Winkel von 90°, die Schneidkante 9 der Gewindeschneidbacke $2_3$ um einen Winkel von 180° und die Schneidkante 9 der Gewindeschneidbacke $2_4$ um einen Winkel von 270° versetzt.

Dabei ist der Gewindeanfang 18 des Gewindes 11 an allen Gewindeschneidbacken $2_1$, $2_2$, $2_3$ und $2_4$ symmetrisch relativ zu einer von den Flächen des Vielflächners 13 ausgebildet.

Beim Abstumpfen der Schneidkanten der Gewindeschneidbacken sind alle Gewindeschneidbacken in einer Richtung bis zur nächsten Fläche zu drehen.

Das erfindungsgemäße Schneideisen mit auswechselbaren Gewindeschneidbacken hat folgende Wirkungsweise. Das Gehäuse 1 des Schneideisens wird im Spannfutter einer Werkzeugmaschine eingespannt und in Drehung versetzt oder dem sich drehenden Werkstück in axialer Richtung bis zum Eingreifen in das Werkstück durch die Schneidkanten 9 der Gewindeschneidbacken 2 zugestellt. Eine weitere axiale Verschiebung des Werkzeuges vollzieht sich unter Einwirkung der Selbstanziehungskräfte.

Das erfindungsgemäße Schneideisen mit auswechselbaren Gewindeschneidbacken weist im Vergleich zu dem bekannten Schneideisen eine einfachere Konstruktion auf, die vier Elemente enthält, von denen nur zwei Elemente eine Hilfsfunktion ausüben. Die Sitzstellen weisen eine Geometrie auf, die aus elementaren Flächen, einer zylinderförmigen und einer polyedrischen Fläche, d. h. aus Abschnitten der Ebene besteht. Dadurch wird eine Regulierung der Anordnung der Gewindeschneidbacken bei deren Einsetzen ins Gehäuse des Schneideisens nicht mehr erforderlich.

Gewerbliche Verwertbarkeit

Die Erfindung kann besonders erfolgreich beim Schneiden von metrischen, Zoll- und ähnlichen Gewinden an Maschinenteilen aus schwer bearbeitbaren und verformbaren Werkstoffen verwendet werden.

Die Erfindung kann auch zum Gewindeschneiden an Teilen aus beliebigen Konstruktionsmetallen (Legierungen) sowohl bei der Fertigung dieser Teile als auch bei deren Reparatur verwendet werden.

EP 0 363 483 A1

PATENTANSPRÜCHE:

1. Schneideisen, das ein Gehäuse (1) mit Sitzstellen und auswechselbaren Gewindeschneidbacken (2) enthält, welche mit ihren Sitzstellen in den Sitzstellen des Gehäuses (1) eingesetzt sind und mehrere Schneidkanten (9) aufweisen, an denen ein Gewinde (11) ausgeführt ist, dadurch g e - k e n n z e i c h n e t , daß die Sitzstellen jeder Gewindeschneidbacke (2) durch die Oberfläche (14) eines Zylinders (12) und Flächen (15) eines Vielflächners (13) gebildet sind, während die Sitzstellen des Gehäuses (1) durch zwei koaxiale Bohrungen - eine zylinderförmige Bohrung (16) und eine mehrflächige Bohrung (17) - gestaltet sind, die den Sitzstellen der Gewindeschneidbacken (2) entsprechen, wobei die Anzahl der Flächen (15) des Vielflächner (13) ebenso wie die Anzahl der Schneidkanten (9) einer Gewindeschneidbacke (2) der Anzahl der Gewindeschneidbacken (2) des Schneideisens gleich ist.

2. Schneideisen nach Anspruch 1, dadurch g e - k e n n z e i c h n e t , daß eine der Gewindeschneidbacken (2) derart angeordnet ist, daß deren Schneidkante (9), an der der relativ zu dem Gewindeanfang (18) erste Gang des Gewindes (11) ausgeführt ist, in einer Ebene liegt, welche durch die Achse (O-O) dieser Gewindeschneidbacke (2) und die Achse $(O_1-O_1)$ des Schneideisens verläuft, wobei jede nachfolgende Gewindeschneidbacke (2) am Gehäuse (1) derart angeordnet ist, daß deren Schneidkanten (9), an denen die relativ zu dem Gewindeanfang (18) ersten Gänge des Gewindes (11) ausgeführt sind, relativ zu der Schneidkante (9) des ersten (in bezug auf den Gewindeanfang (18)) Ganges des Gewindes (11) der ersten Gewindeschneidbacke (2) um einen Winkel versetzt sind, der $(k-1) \cdot \dfrac{360^\circ}{n}$ beträgt, worin

n - die Anzahl der Schneidkanten an der Gewindeschneidbacke; und

k - die Ordnungszahl der Gewindeschneidbacke bedeuten, wobei der Gewindeanfang (18) des Gewindeganges (11) an allen Gewindeschneidbacken (2) symmetrisch zu der Ebene einer der Flächen (15) des Vielflaches (13) ausgeführt ist.

FIG.1

FIG.2

FIG.3

FIG.4

FIG.5

# INTERNATIONAL SEARCH REPORT

International Application No PCT/SU 88/00026

## I. CLASSIFICATION OF SUBJECT MATTER (if several classification symbols apply, indicate all) 6

According to International Patent Classification (IPC) or to both National Classification and IPC

IPC4 B 23 G 5/08

## II. FIELDS SEARCHED

### Minimum Documentation Searched 7

| Classification System | Classification Symbols |
|---|---|
| IPC4 | B 23 G 5/04, 5/08, 7/02, B 23 F 21/16 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | SU, A1, 1049208, (E.V. Voroshilin), 23 October 1983 (23.10.83), see column 2 lines 15-25 | 1,2 |
| Y | SU, A1, 903002, (V.A. Dolotov et al.) 7 February 1982 (07.02.82), see the claims | 1 |
| A | US, A, 3775792, (Vermont American Corporation), 4 December 1973 (04.12.73), see column 4 lines 26-32 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 2 September 1988 (02.09.88) | 5 October 1988 (05.10.88) |
| International Searching Authority | Signature of Authorized Officer |
| ISA/SU | |

Form PCT/ISA/210 (second sheet) (January 1985)